# EUROPEAN PATENT SPECIFICATION

(11) **EP 2 314 125 B1**
(45) Date of publication and mention of the grant of the patent: **28.03.2012**
(21) Application number: 08789998.5
(22) Date of filing: 19.06.2008
(51) Int. Cl.: H04W 56/00, H04W 84/18

(54) **MOBILE AD-HOC NETWORK**
MOBIL-AD-HOC-NETZ
RÉSEAU AD HOC MOBILE

(43) Date of publication of application: 27.04.2011
(73) Proprietor: SELEX ELSAG S.P.A., Genova (IT)
(72) Inventor: MOZZONE, Lorenzo, I-16151 Genova (IT)
(74) Representative: Cerbaro, Elena
(86) International application number: PCT/IT2008/000409
(87) International publication number: WO 2009/153817

(56) References cited:
- WO-A-01/41348
- WO-A-2004/062179
- US-A1- 2004 166 812
- US-A1- 2005 174 962
- US-A1- 2007 258 371
- HOBBIS K: "A MINIMUM DELAY CEPT INTERFACE" MOTOROLA TECHNICAL DEVELOPMENTS, MOTOROLA INC. SCHAUMBURG, ILLINOIS, US, vol. 30, 1 March 1997 (1997-03-01), page 77/78, XP000657370 ISSN: 0887-5286

## Description

### FIELD OF THE INVENTION

The present invention relates to a mobile ad-hoc network, and more in particular to a mobile ad-hoc network (MANET) based on WiMAX protocol and technology.

### BACKGROUND OF THE INVENTION

WiMAX ("Worldwide Interoperability for Microwave Access") is a standard designated IEEE 802.16-2004 (fixed wireless applications, also referred to as IEEE 802.16d) and 802.16e-2005 (mobile wireless applications). This standards-based technology enables the delivery of last mile wireless broadband access as an alternative to cable modem services and digital subscriber lines (DSL).

The WiMAX architecture includes an access service network (ASN), one or more mobile stations (MS) and a connectivity service network (CSN). The ASN provides for connecting the MS, through an air link, to an IP backbone. In particular, the ASN comprises base stations (BS) and access gateways (ASN-GW). The interface between the ASN and the MS is the BS.

Each BS is intended as a fixed station providing a point-to-multipoint connection with a plurality of end users, each of them being a MS. For an optimum coverage of the served areas, the BS may comprise one or more transmitting/receiving antennas mounted on a trestle, so as to cover a wide area to deliver a point-to-multipoint connection to the Internet from an ISP to a plurality of end users.

WiMAX is well renown for its spectral efficiency, adaptability and quality of service, superior to most of other commercial standard-based wireless networks. For example, WiMAX has a high level of flexibility, supporting various connection schemes; it has a high level of security, implementing a number of cryptographic and authentication techniques; it has various quality of service typologies, according to the service requested; it has a high throughput, bearing a considerable data traffic with high spectrum efficiency; it allows stable connections when the user is in motion, up to about 160 km/h; and has a unique ability of transmitting/receiving data in partially obstructed environment, even when the line of sight between transmitter and receiver is partially obstructed.

However, WIMAX technology has not been created for mobile ad-hoc networks (MANET), where a collection of mobile nodes, with neither pre-established network infrastructure nor centralized administration, forms a temporary network. Mobile ad hoc networks are infrastructureless networks since they do not require any fixed infrastructure for their operation. Nodes should be able to enter or leave the network as they wish. Moreover, the nodes of a MANET are free to move randomly and organize themselves arbitrarily, thus the network wireless topology may change rapidly and unpredictably. Even if the nodes in the ad-hoc network are often mobile, operating in a standalone mode, some of them may also be stationary, constituting, for example, an access point to the Internet.

Patent Application US 2004/0165812 discloses methods, systems, devices and computer program instructions for enabling low-power wireless devices to connect to a fast wired or wireless voice/data network.

Patent Application US 2007/0258371 discloses a scheduling technique useful in a mesh network, the scheduling technique including scheduling a selected amount of traffic in the mesh network using a linear program approach that minimizes a time for the selected amount of traffic to reach its intended destination.

A mobile ad-hoc network based on WiMAX protocol would thus be appreciated, since it combines the flexibility of an ad-hoc network with the efficiency and quality of service of the WiMAX technology.

### OBJECT AND SUMMARY OF THE INVENTION

The aim of the present invention is to provide an ad-hoc network able to work on the base of the WIMAX technology.

According to the invention, there are provided an ad-hoc network and a relative management method, as defined in claims 1 and 10, respectively.

### DESCRIPTION OF THE FIGURES

For a better understanding of the present invention, preferred embodiments, which are intended purely by way of example and are not to be construed as limiting, will now be described with reference to the attached drawings, wherein:
- Figure 1 shows a cluster of nodes organized in a daisy chain concatenation;
- Figure 2 shows signal synchronization between a base station and a mobile station belonging to different nodes, according to an IEEE 802.16d Time Division Duplexing (TDD) transmission scheme;
- Figure 3 shows signal synchronization between a base station and a mobile station belonging to different nodes, according to an IEEE 802.16e Time Division Duplexing (TDD) transmission scheme;
- Figure 4 shows signal synchronization between a base station and a mobile station belonging to different nodes, according to an IEEE 802.16d Frequency Division Duplexing (FDD) transmission scheme;
- Figure 5 shows signal synchronization between a base station and a mobile station belonging to different nodes, according to an IEEE 802.16e Frequency Division Duplexing (FDD) transmission scheme;
- Figures 6a and 6b show the architecture of two embodiments of a node;
- Figure 7 shows an architecture of another embodiment of a node;
- Figure 8 shows signal synchronization between nodes having the architecture shown in Figure 6a, 6b or 7;
- Figure 9 shows an architecture of another embodiment of a node;
- Figure 10 shows signal synchronization between nodes having the architecture shown in Figure 9;
- Figure 11 shows an architecture of a further embodiment of a node;
- Figures 12a-12c show schematically a mobile station handover procedure;
- figures 13a-13b show schematically a cluster split procedure;
- Figures 14a-14c show schematically a cluster merge procedure; and
- Figure 15 shows schematically a cluster shrink/cluster expand procedure.

### DETAILED DESCRIPTION OF THE INVENTION

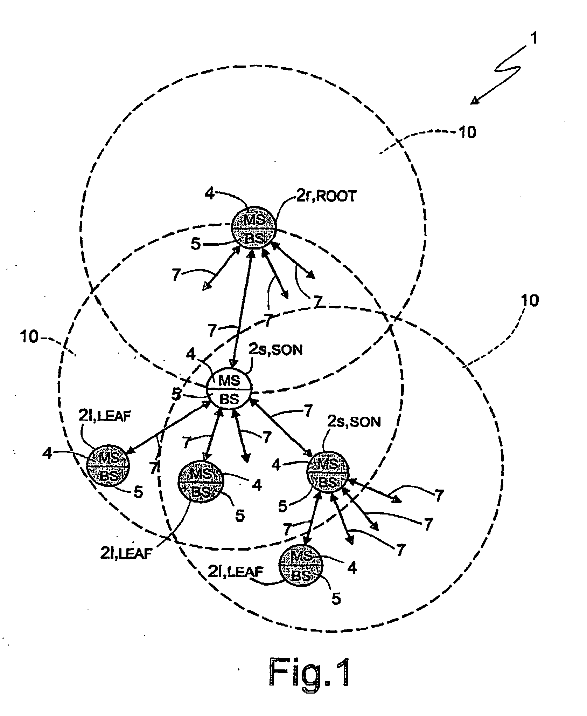

Figure 1 shows, schematically, a mobile ad hoc network 1 based on WiMAX broadband radio access technology and protocol.

The network (later named cluster 1) comprises a plurality of mobile, or fixed nodes 2, organized in a daisy chain concatenation. Each node 2 includes a mobile station (MS) 4 and a base station (BS) 5, connected one another. According to the WiMAX standard, a generic base station 5 of a node 2 provides a plurality of radio links 7 for connecting with a plurality of mobile stations 4, in a point-to-multipoint connection, while each mobile station 4 supports a single radio link 7. In particular, each radio link 7 allows the transport of bidirectional digital data packet traffic.

Accordingly, in the cluster 1, a node 2, identified as son node 2s, is connected to the base station 5 of another node 2, identified as father node 2f, through its mobile station 4 and one radio link 7 (schematically represented as a bi-directional arrow) and in turn supports multiple radio links 7 with further son nodes 2s by means of its base station 5. A node 2, whose mobile station 4 has not established a radio link 7 with a base station 5 of a father node 2a, is named root node 2r, while a node 2 whose base station 5 has not established any radio link 7 with a son node 2s is named leaf node 21.

Thus, the cluster 1 may be graphically represented (Figure 1) as a tree, having a single root node 2r and multiple father/son/leaf nodes 2f/2s/21.

According to particular needs (as explained more in detail later), a generic node 2 may change role and become a son node 2s, a leaf node 21, a father node 2f or a root node 2r. Procedures for and effects of a role changing are illustrated afterwards.

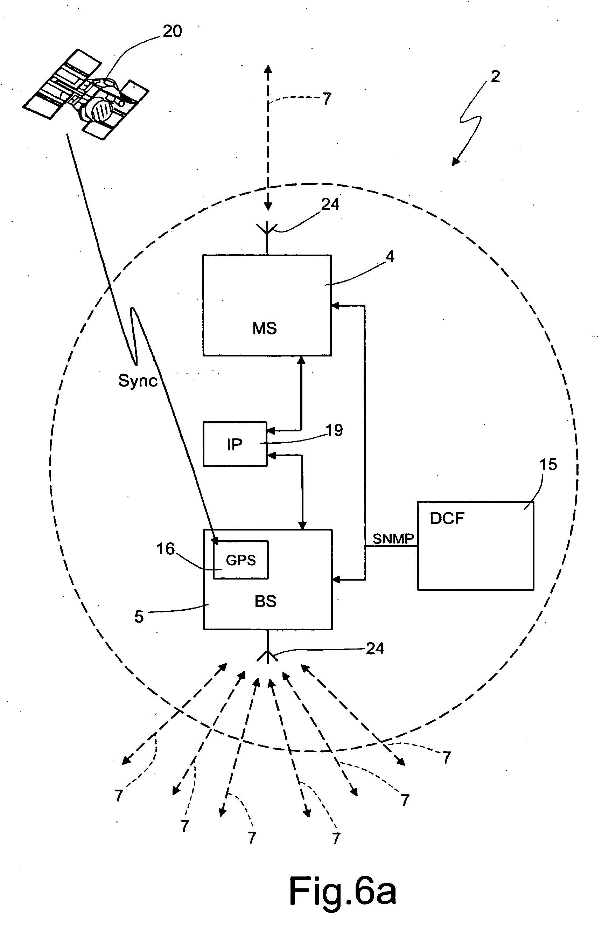

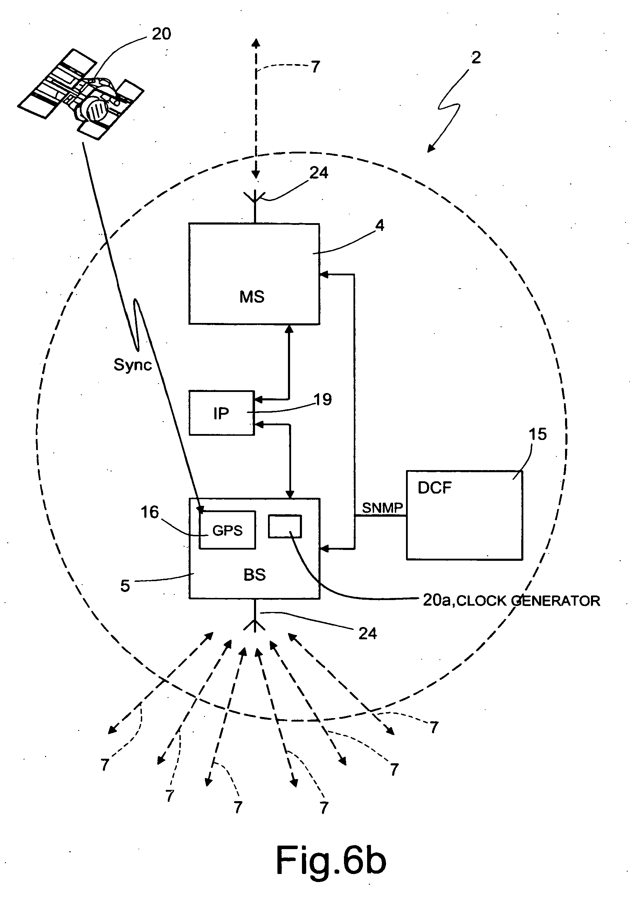

The nodes 2 of the cluster 1 communicate effectively with each other only if they are synchronized. The root node 2r, and in particular its base station 5, gets a synchronization signal Sync from a Global Positioning Satellite (GPS, Figure 6a), or from an arbitrary clock 20a, embedded within the root node 2r (Figure 6b) or communicating with it in any known manner. The base station 5 in turn, provides the synchronization signal to the son/leaf nodes 2s/21. Each son node 2s, receiving with its mobile station 4 the synchronization signal through its own radio link 7, provides the synchronization signal to its son/leaf nodes 2s/2l.

The base station 4 of each node 2 generates a WiMAX frequency cell 10 to which a working frequency is assigned in a classical cell planning pattern with frequency reuse. This means that neighboring cells 10 use different frequency channels, while distant cells 10 may use the same frequency channel, for best spectral efficiency and minimal interference.

A multi channel MANET (MCM) architecture is therefore deployed, and each individual cell 10 provides unconstrained standard WiMAX bitrates, quality of service, spectral efficiency and WiMAX advantages in general.

Coordinated cell planning functions can be carried out by an integrated network management implemented in any node 2 or by an algorithm implemented in a distributed control function (DCF) block (located in each node 2, as explained with reference to Figure 6a).

According to IEEE 802.16d standard and in particular to a time division duplexing (TDD) transmission/reception scheme, each base station 5 generates one frequency cell 10 using one frequency channel and transmits a periodical frame (e.g., having a duration of 5ms).

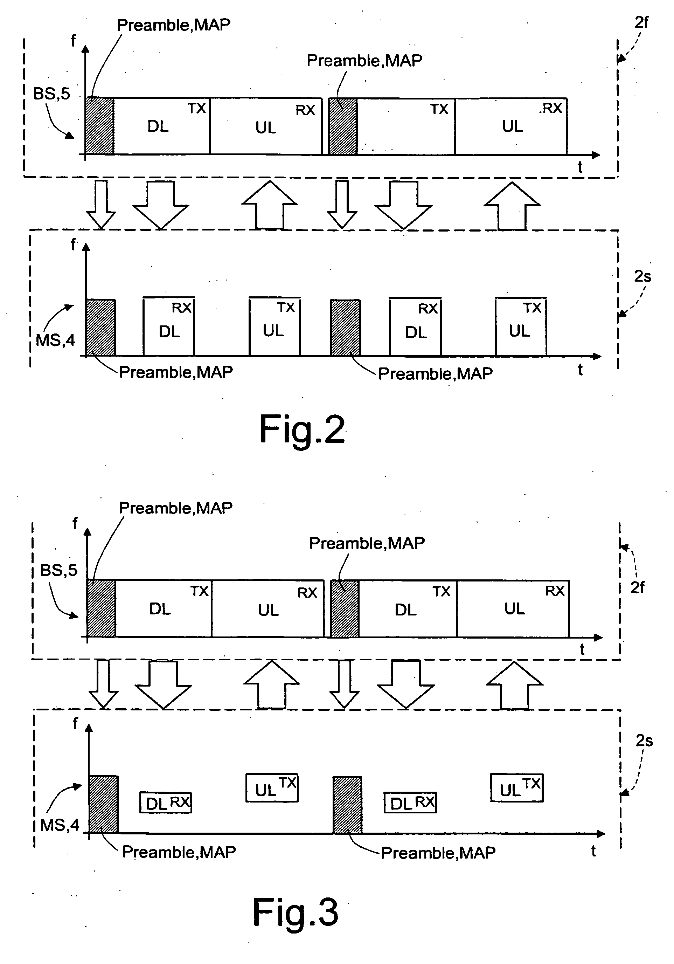

Figure 2 shows a graphical representation of a synchronization scheme between a base station 5 (BS) of a father node 2f and a mobile station 4 (MS) of son node 2s. The base station 5 of a father node 2f establishes a down link and an up link channel using different time slots of a same frequency channel. The mobile station 4 of a son node 2s, connected to the base station 5 of the father node 2f, receives data information during the down link time slot (DL) and transmit data information during the up link time slot (UL). It is clear that, for proper data information exchange, the length of the time slots used for transmission and reception by the mobile station 4 of the son node 2s is equal or lower than the respective time slots allocated by the base station 5 to which the mobile station 4 is connected, and synchronized to them. A preamble, i.e. a sequence of synchronization symbols and a sequence of control symbols (named MAP), with Media Access Control messages, is sent by the base station 5 of the father node 2f for synchronization and coordination purposes before establishing the up link and the down link.

According to IEEE 802.16e standard, using a time division duplexing (TDD) transmission/reception scheme, as shown in Figure 3, the base station 5 of a father node 2f establishes a down link (DL) and an up link (UL) channel using different time slots of a same frequency channel, similarly to what already explained with reference to Figure 3. However, in this case, the mobile station 4 of the son node 2s connected to the base station 5 of the father node 2f, not only transmits/receives on different time slots but also using different frequency sub-channels, one for the up link and one for the down link. In particular, each mobile station 4 taps/puts the data information to be transferred in a short time slot and a small frequency subset within the down link/up link interval/channel. Thus, the frequency sub-channels for the up link and the down link are a sub-set of the frequency channel established by the base station 5 of the father node 2f, using an orthogonal frequency division multiple access (OFDMA) technique, that splits the frequency channel into many smaller independent (i.e., orthogonal) subchannels. The frequency subset can be made up of several non-contiguous physical subchannels that are logically grouped, together, as indicated in the IEEE 802.16e standard.

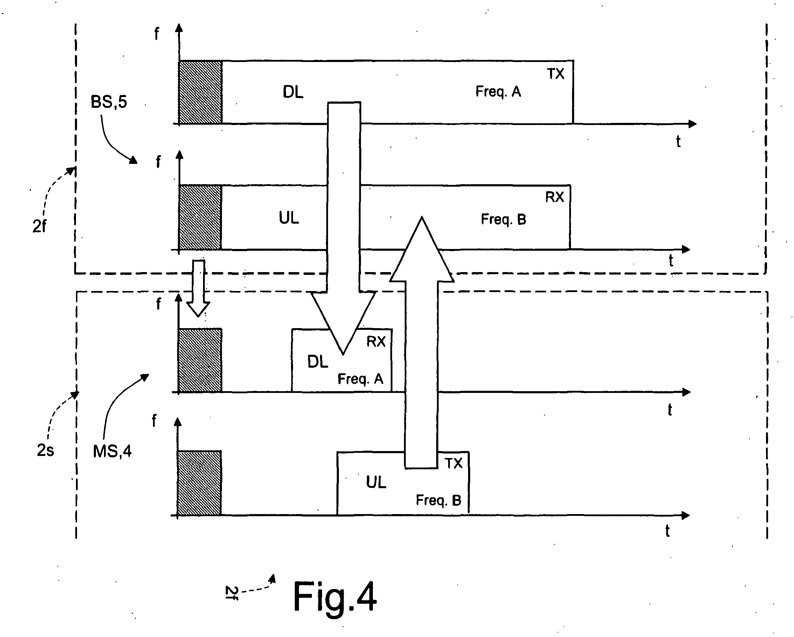

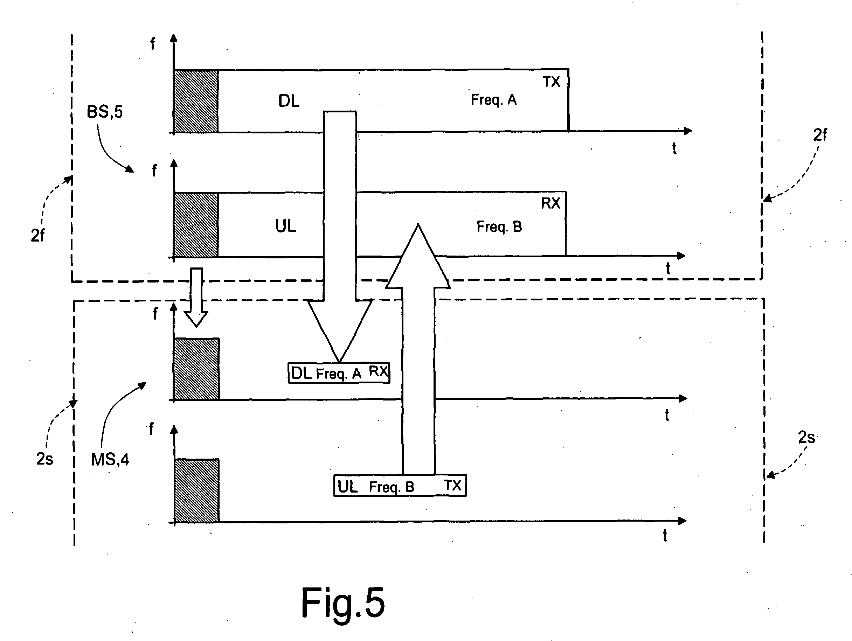

Figure 4 and 5 show a possible alternative to the TDD transmission/reception scheme, respectively for IEEE 802.16d and IEEE 802.16e standards. In particular, a frequency division duplexing (FDD) transmission/reception scheme is shown for both standards. With reference to both Figures 4 and 5, the base station 5 of a father node 2f establishes an up link (UL) on a first frequency channel A, and a down link (DL) on a second frequency channel B. Accordingly, the mobile station 4 of the son node 2s establishes the down link (DL) on the first frequency channel A and the up link (UL) on the second frequency channel B, in synchronized time slots. The frequency assignment for IEEE 802.16d (Figure 4) and IEEE 802.16e (Figure 5) differs in that IEEE 802.16e allows the use of OFDMA subchannels, as shown above with reference to Figure 3. The assignment of the time slots and frequency subchannels to the up link and down link is managed by IEEE 802.16d/802.16e standard scheduling procedures.

Figure 6a shows a block representation of the structure of a node 2 that may be used to implement the cluster 1 of Figures 1 and 2, according to a first embodiment. Here, the node 2 comprises the mobile station 4, the base station 5 and a distributed control function block (DCF block 15) communicating with the mobile station 4 and the base station 5. The mobile station 4 and the base station 5 of each node 2 may be standard COTS (Commercial Off The Shelf) equipments, displaced side by side or with some degree of integration in a mechanical housing and comprising an own antenna 24. By using commercially available COTS equipments, the overall system development costs are low and the development time required is minimum, while a higher integration may allow a reduction in weight and space.

The mobile station 4 within a son/leaf node 2s/2l acquires the synchronization, through the radio link 7, from the base station 5 of a father node 2f. In the case of Figure 6a, where the node 2 is the root node, the mobile station 4 receives the synchronization signal Sync from a GPS satellite 20 through a GPS receiver 16.

Figure 6b shows an architecture similar to the one of Figure 6a, wherein the synchronization signal Sync may also be generated internally by a clock generator 20a.

The base station 5 receives the synchronization signal Sync from the mobile station 4 of the same node 2 through a sync connection 18, implemented, for example, by a wire connection or a wireless connection. In turn, the base station 5 provides the synchronization signal sync to son/leaf nodes 2s/2l, if any, connected thereto through their own respective radio link 7.

The DCF block 15 may be a small embedded computer resource with a standard operating system (e.g. Linux), that executes a distributed control function (DCF) or distributed management function (DMF) script at the Application ISO/OSI protocol layer. The DCF block 15, through the DCF/DMF functions executed, is aimed at configuring and controlling the base and the mobile station 5, 4 located in the same node 2 and runs WiMAX standard mobility management functions. It also support other standard ASN (Access Service Network) functions of the WiMax network formed by the co-located base stations and mobile stations. Interfacing between such Distributed Control Function Application and MAC ISO/OSI protocol layers of mobile and base stations 4, 5 within a node 2 takes place at management level, via simple network management protocol (SNMP) and management information base (MIB). In this way, working parameters of the broadband wireless access (BWA) protocol are accessed and modified in each node 2 via the standard management interface and the standard local management agent. Additionally, the DCF block 15 may support data information (e.g. packets) routing functions or alternately may be assisted by a small embedded IP switch/router equipment 19 that may also be embedded in the nodes 2, in order to efficiently forward data information according to the routes defined by the distributed management function, and run spanning-tree standard protocols.

Finally, the mobile station 4 and the base station 5 exchange data packets, for example during multiple packet hops across any paths in the network, through an IP network implemented by the IP switch/router 19.

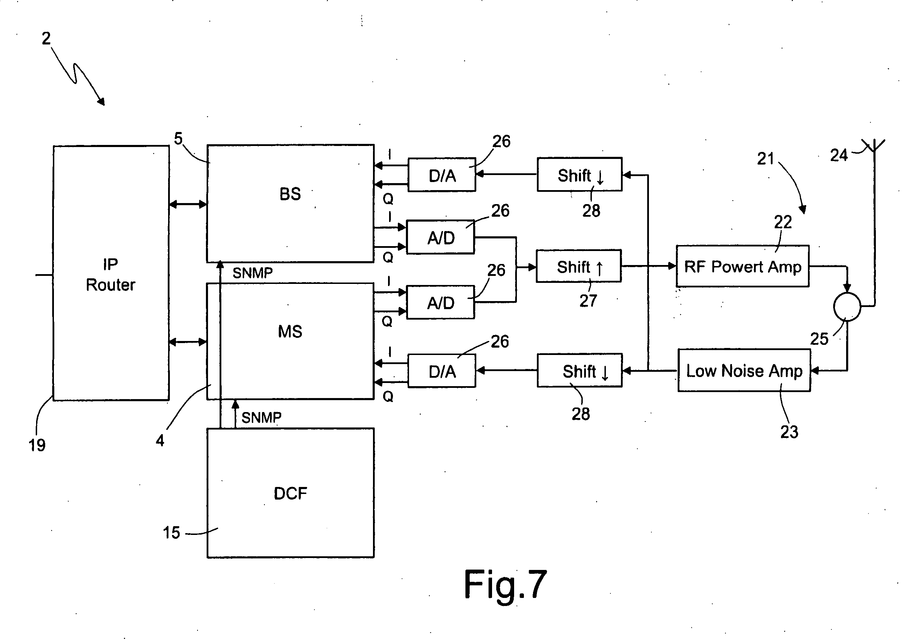

Figure 7 shows a block representation of a further embodiment of a node 2. The node 2 of Figure 7 is analogous to the node 2 of Figure 6a or 6b, but in this case the mobile station 4 shares a common front-end stage 21 with the base station 5. In particular, the mobile station 4 and the base station 5 shares a common radio frequency power amplifier 22, aimed at amplify the outgoing signals generated by both the mobile station 4 and the base station 5 before transmission, and a common low noise amplifier 23, aimed at increasing the signal strength for incoming signals for both the mobile station 4 and the base station 5. The RF power amplifier 22 and the low noise amplifier 23 are alternately connected to an antenna 24 by means of a switch 25 for, respectively, transmitting and receiving data signals. Alternately to the switch 25, a circulator may also be used to improve overall performance with better signal quality.

Moreover, to allow communication between the front-end stage 21 and the mobile and base station 4, 5, analog-to-digital (A/D) and digital-to-analog (D/A) converters 26 are interposed. Between the converters 26 and the front end stage 21, band shifting circuits 27, 28 are arranged. The band shifting circuits 27, 28 are used to shift in frequency the signals respectively generated and received by the mobile and the base stations 4, 5, so as to locate and filter these signals to the provided band (e.g., transmission or base band). The embodiment of Figure 7 is advantageous for applications with reserved working frequency bands and high RF transmission power, where savings may be significant in terms of complexity, cost, weight, volume. As a drawback, since RF power is shared, the max RF power available is limited by 3 dB, and thus reducing the RF coverage range to 70% (assuming a free-space spherical propagation with 6 dB attenuation per doubling of distance).

Whether the nodes 2 use a high radio frequency power (Figure 6a-6b), or if they share the front end stage 21 (Figure 7), a transmission interference of mobile station 4 and base station 5 within the same node 2 may occur. To avoid this problem, according to a solution applicable to both IEEE 802.16d and 802.16e TDD standards with equal downlink and uplink duration, all the nodes 2 operate with a same cycle time (frame), but the mobile station 4 and the base station 5 embedded in the same node 2 are offset to each other by a 1/2 frame shift. Moreover, nodes 2 directly linked may be synchronized one another with alternated reception/transmission phases (an odd phase and an even phase). It is thus clear that, once the cluster 1 is formed, the son/leaf nodes 2s/2l are either synchronous to the root node 2r (represented as gray nodes in Figure 1) or 1/2 frame shifted with respect to the root node 2r (represented as white nodes in Figure 1). Hereinafter, the nodes 2 transmitting synchronously with the root node 2r are called even nodes and the nodes 2 transmitting in counterphase with respect to the root node 2r are called odd nodes.

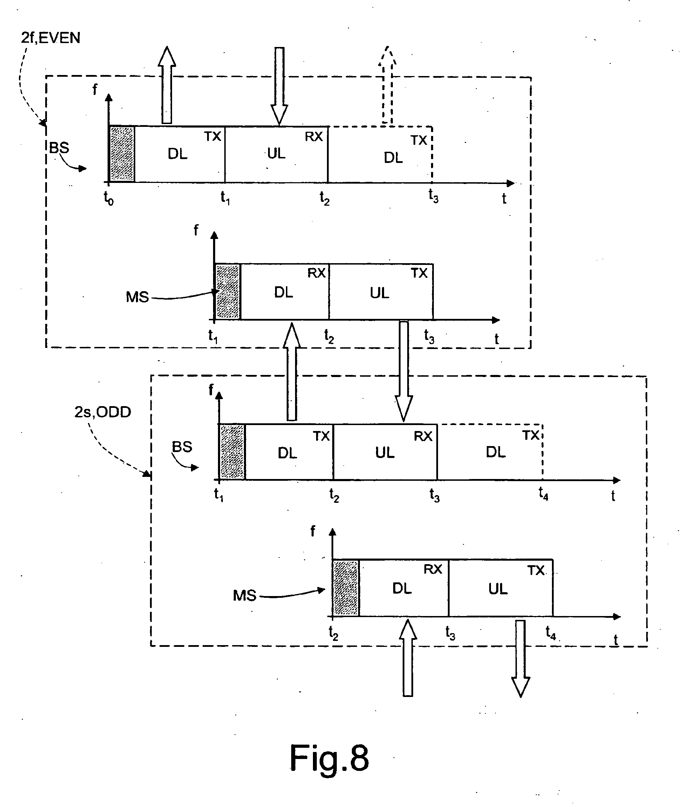

Figure 8 shows a graphical representation of a synchronization scheme applicable to IEEE 802.16d and 802.16e TDD standards, and that may be implemented for odd and even nodes 2 having the architecture shown in Figures 3 or 4. Transmission phase is handled in parallel, at the same time, by the base station 5 and the mobile station 4 of the same node 2. Accordingly, also the reception phase is handled in parallel and at the same time. The base station 5 acquires the synchronization from the mobile station 4 so as to transmit when also the mobile station 4 is transmitting and receive when also the mobile station 4 is receiving. The base stations 5 and mobile stations 4 of even and odd nodes 2 transmit and receive with a synchronization shift of 1/2 frame to each other.

With reference to Figure 8, a frame associated with the base station 5 of the even node 2 starts at time to (after a proper network setup time interval, as defined by the WiMAX standard) and ends at time t₂. More in detail, the base station 5 of the even node transmits on the down link (DL) for half of the frame duration (up to time t₁) and receives on the up link (UL) for the remaining half frame duration (from time t₁ to time t₂). The frame associated with the mobile station 4 of the same even node 2 starts at time t₁ and ends at time t₃ (i.e., with a shift of half frame time with respect to the base station 5 of the same even node 2). The mobile station 5 of the even node receives on the down link from time t₁ to time t₂ and transmits on the up link from time t₂ to time t₃. Thus, transmission and reception phases from and to the mobile stations 4 of all nodes are temporally aligned with respective transmission and reception phases from and to the base station 5 of the same node, but they are carried out on two different frequency channels.

The base station 5 of the odd node 2 transmits and receives in the frame starting at time t₁ (after a proper setup time) and ending at time t₃. the mobile station 4 is temporally aligned with the frame generated by the base station 5 of the even node 2. In this case the transmission and reception phases are inverted. In fact, from time t₁ to time t₂, the base station 5 of the odd node 2 transmits on the down link, while from time t₂ to time t₃ it receives on the up link.

Communication between odd and even nodes 2 is made possible because the mobile station 4 of the even nodes 2 gets synchronized by the transmission of the base stations 5 of the odd nodes 2 via wireless link. Even nodes 2 can connect only with odd nodes 2, and vice versa. Nodes 2 with the same phase cannot link directly to each other. However, a change of phase can rapidly take place in any node 2, to allow node mobility throughout the cluster 1 and/or node entry/leaving. This task may be accomplished by known registration functionalities of the mobile station 4 according to the WiMAX standard.

Moreover, a cluster 1 can link to another cluster 1 at either of its root node 2r or one of its son/leaf nodes 2s/2l.

A relevant constraint derives from overall synchronization of the cluster 1, that is provided by the root node 2r to son/leaf nodes 2s/21 with multiple hops, from one node 2 to another. This may impact on the scalability of the cluster 1 and may cause son/leaf nodes 2s/2l having an increasing distance from the root node 2r (e.g., in terms of number of intermediate hops and/or distance per hop) to lose the synchronization. This issue is solved by the WiMAX protocol, that compensates for travel time of signals with distance by means of WiMAX standard Path Delay Compensation functionality. Moreover, input data from an embedded GPS terminal in each node 2 can eliminate completely this shortcoming.

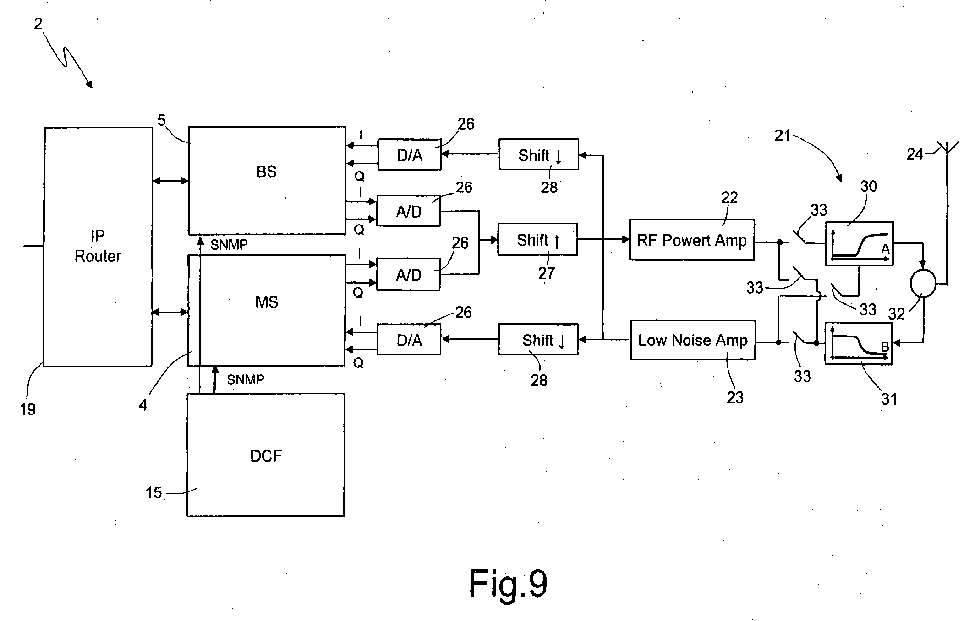

The frame format and architectures shown above can be used with either WiMax standard protocols IEEE 802.16d or IEEE 802.16e in the TDD (Time Division Duplexing) version, where the up link and the down link are duplexed in the time domain. The embodiment of Figure 9 is analogous to the embodiment of Figure 7, except for the addition of a first filter 30, arranged between the RF power amplifier 22 and the antenna 24, and a second filter 31, arranged between the low noise amplifier 23 and the antenna 24.

First and second filter 30, 31 ensure optimal transmission and reception de-coupling (that take place in, respectively, the frequency channels corresponding to the upper and lower band A, B, or viceversa). The use of fixed first and second filter 30, 31 has the advantage of a very high frequency selectivity, thus eliminating any crosstalk between transmission and reception phases, that would otherwise take place at the same time in the base station 5 and mobile station 4 of the same node 2.

Furthermore, contemporary transmission and reception are allowed by an additional decoupling of transmission/reception signals, made possible by using a circulator 32 instead of the switch 25, so that incoming signals from the antenna 24 are directed to the low noise amplifier 23, while outgoing signals, from the RF power amplifier 22, are directed to the antenna 24.

Moreover, the roles of the first and the second filter 30, 31 may be reversed through switches 33, so as to exchange the role of the node 2 between even and odd. In one role (e.g., even), the switches 33 are set so as to connect the first filter 30 to the low noise amplifier 23 and using it during reception, and connect the second filter 31 to the RF power amplifier 22 and using it during transmission.

In the other role (e.g., odd), the switches are set so as to connect the first and the second filter 30, 31 the other way round.

The first filter 30 filters signals during transmission/reception (depending on the fact that the considered node is an even or an odd node 2) so as to enable the passage of the data signals located in one among the upper and lower band (e.g. in the upper band A), while the second filter 31 is aimed at filtering the data signals during reception/transmission so as to select the alternate band (e.g. the lower band B). First and second filters 30, 31 may be, for example, highly selective cavity filters.

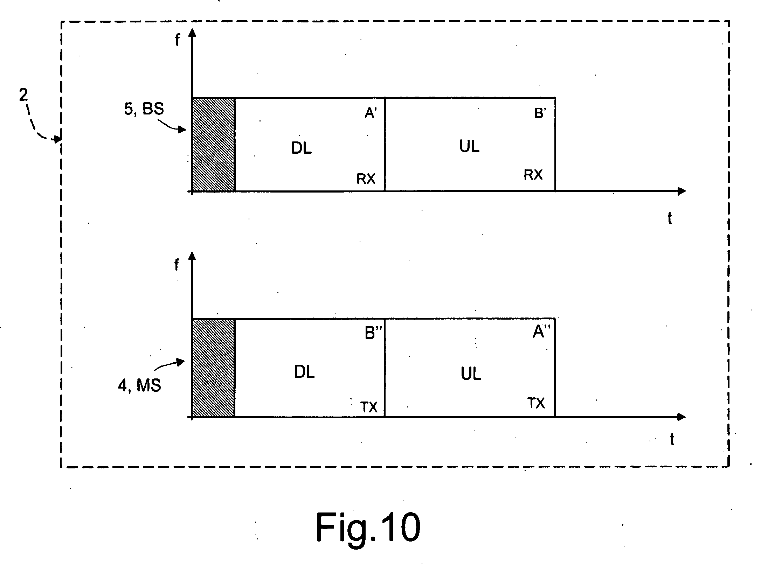

Figure 10 shows an alternate frame structure that differs from the TDD version of IEEE 802.16d/802.16e protocols discussed so far, with reference to Figures 4, 5. This alternate option of frame structure cannot be used with Commercial Off The Shelf equipment, but only with the specific architecture of Figure 9. A synchronized TDD with split subbands is employed so as to optimize frequency use and time. In this case, the up link and the down link phases of the base station are assigned to two different frequency channels.

The frequency channels of the up link and the down link are assigned to two widely split subbands, more precisely an upper band A and a lower band B, selected by the first and second filter 30, 31 (e.g., selective static cavity filters) embedded in the nodes 2 according to the architecture of Figure 9.

Transmission and reception phases of the base station 5 and the mobile station 4 of the same node 2 are handled in parallel, at the same time, on two frequency channels located in two different and well separated frequency subbands A and B, i.e. an upper band and a lower band. The first and second filter 30, 31 of Figure 9 ensure optimal carrier to interference and noise ratio (CINR).

The base station 5 transmits in a first frequency channel A' of the upper band A. At the same time, the mobile station 4 is receiving on a second frequency channel B" of the lower band B. Analogously, the base station 5 receives on a third frequency channel B' of the lower band B, while the mobile station 4 is transmitting on a fourth frequency channel A" in the upper band A.

Even and odd nodes 2 are synchronized each other via the daisy chain concatenation of wireless links, so that when the base station 5 of, e.g., an even node 2 transmits/receives in two frequency channels of the upper band/lower band, the mobile station 4 of the odd node 2 receives/transmits on the same two frequency channels of the upper band/lower band.

The embodiment of Figure 9, associated with the frame structure of Figure 10, has the advantage of having the RF power amplifier 22 working on the full transmission range, since it works almost full time. As a drawback, the first and second filters 30, 31 take up space, weight and add an additional cost to the node equipment. This trade-off is considered optimal in some specific applications where reduction cost and volume of the RF power amplifier 22 represents the priority.

The same embodiment of Figure 9 can be used with fully standard WiMax frames. In this case, however, the filters need to be bandpass filters, fine-tuned to the two working frequency channels, and connections need to be switched at each frame, not only when nodes 2 change their role between even and odd.

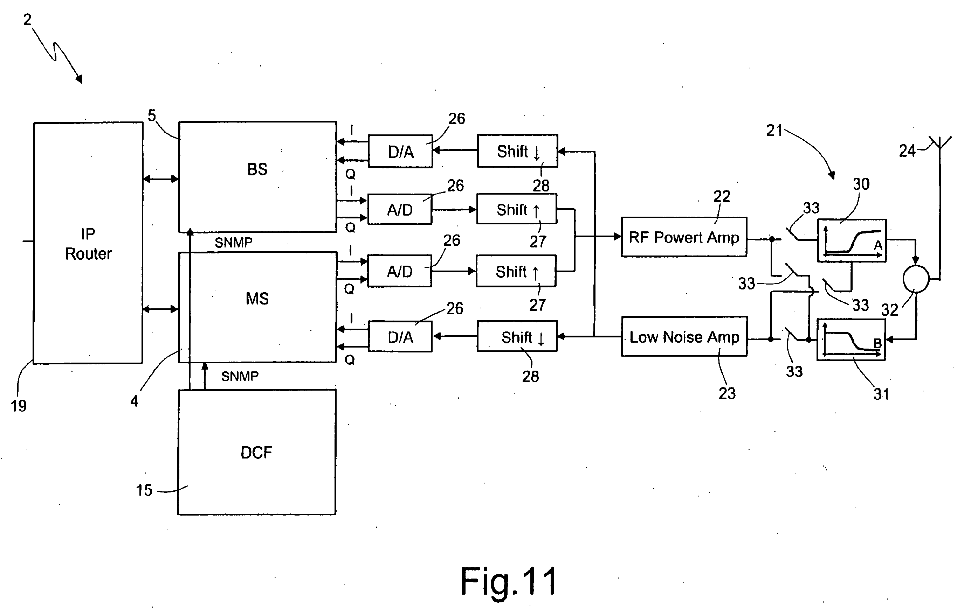

Figure 11 shows an architecture of another embodiment of a node 2 that can be used together with a frequency division duplexing (FDD) transmission/reception scheme, of the type shown in Figure 4 or 5.

The embodiment of Figure 11 differs from the embodiment of Figure 9 in that the signals generated by the mobile station 4 and the base station 5 are processed by an own band shifting circuit 27, independently, at the same time.

In this case, standard WiMax FDD frame format may be processed only if four fine-tuned bandpass filters (not shown) are present (instead of the two fixed filters as shown in Figure 11).

During use, when a cluster 1 of nodes 2 deployed in a generic environment is being formed, nodes 2 switch on, often simultaneously. Therefore, during formation of a cluster 1, one or more nodes 2 start a searching procedure to detect if any other node 2 is allowed to establish a radio link 7 with them. To avoid collisions between nodes 2 using the same frequency, that may be deployed and thus turn on at the same time, each node 2 turns on after a backoff interval, randomly chosen. When a first node 2 turns on, its mobile station 4 gets the synchronization signal from, e.g., a GPS and its base station 5 generates a cell 10 (thus acting as a root); the nodes within the range of the cell 10 affiliate, one by one, to the first (root) node (with a standard WiMAX procedure) and in turn generate a new cell 10 with their own base station 5. Other nodes 2 may then affiliate as further son nodes 2s or leaf nodes 21. The DCF block 15 embedded in each node supports such activation sequence, controlling the base station 5 and mobile station 4 through the simple network management protocol ,SNMP.

Once the cluster 1 is formed and no more nodes 2 are detected, the nodes 2 forming the cluster 1 may reorganize themselves, so as to choose preferred cluster connections and/or cluster topologies, or according to any cluster configuration procedure. The DCF block 15 embedded in each node 2 supports such optimization.

When a new node 2 enters in the covering range of one or more cells 10 of nodes 2 of a cluster 1, its mobile station 4 chooses, according to a known 802.16e MS scan procedure, the cell 10 having higher signal strength. Then, the new node 2 affiliates with the base station 5 that generates the chosen cell 10 and registers itself as a leaf node 21 within the cluster. The leaf node 21 just affiliated turns its base station 5 on, and creates its own cell 10 using a free frequency channel or reusing a frequency channel already used by another node 2 but causing minimum interference (e.g., because it is used by a node 2 out of its cell range), in a classical frequency reuse cell planning.

When a node 2, belonging to a cluster 1, turns off or exits from the cell coverage area (and does not sense any other cell 10), it becomes a root node 2r.

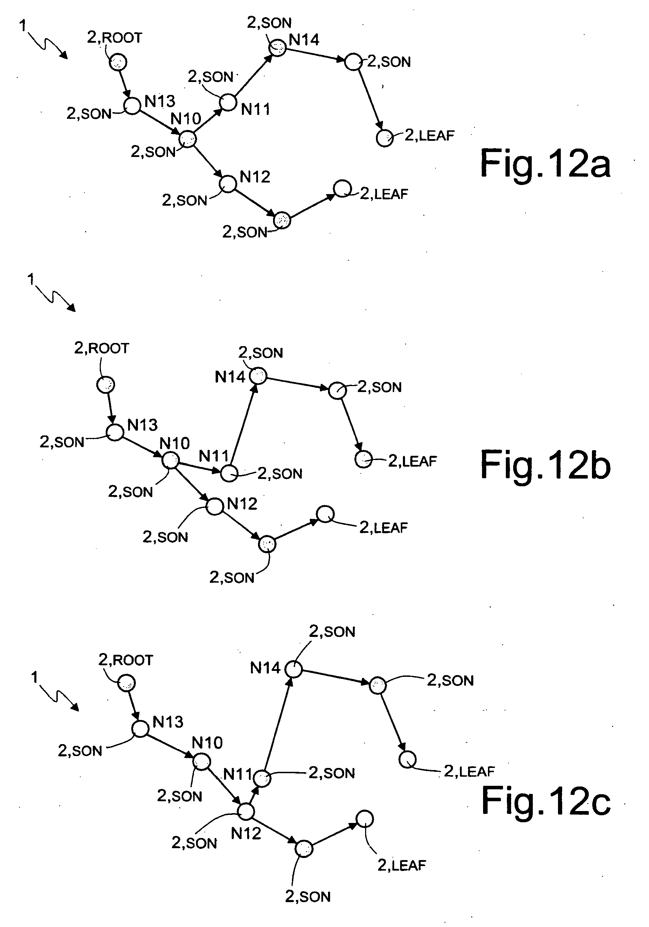

Figures 12a-12c, 13a-13b and 14a-14c shows typical scenarios, during use, related to node mobility, for example cell handover, cluster split, cluster merge, cluster shrink, cluster expansion procedures.

Figures 12a-12c show an exemplary handover procedure managed by a mobile station 4 (MS handover procedure). A cluster 1 comprises a plurality of nodes 2, in motion one respect to another. Analogously to Figure 1, nodes 2 in gray are, for example, the even nodes 2, while nodes 2 shown in white are the odd nodes 2. Thus, even node N₁₀ supports, with its mobile station 4, a single connection to an odd node N₁₃ and, with its base station 5, multiple connections to odd nodes N₁₁ and N₁₂.

If, during motion (Figure 12b), the node N₁₁ enters in the range of the cell 10 generated by the node N₁₂ and the latter cell has a perceived higher signal strength than the signal received by node N₁₀, the node N₁₁ may decide to disconnect from node N₁₀ and establish a new radio link 7 with node N₁₂, namely as a son of node N₁₂ (Figure 12c).

For proper communication between nodes N₁₂ and N₁₁, the node N₁₁, being the son of node N₁₂, changes its synchronization so as to become an even node. Accordingly, nodes 2 that are son of node N₁₁ (node N₁₄ and all nodes 2 connected thereto) change their synchronization from odd to even and vice versa.

The handover procedure may also be required by a base station 5 (BS handover procedure) when it senses increasing interference, for example because it is entering the working frequency range of another base station 5 using the same frequency. According to a first solution, once an interference has been detected, one of the interfering base stations 5 changes its working frequency. According to a second solution, if the nodes 2 are equipped with a GPS receiver, the root node 2r may act as a centralized coordinator; managing the cell planning on the basis of the relative position of the nodes; according to another alternative, the DCF blocks 15 of all nodes 2 are informed about the relative positions and may plan the frequency channels. In the last two cases, a new frequency channel is assigned to one of the base stations 5 for which there is the risk of an interference, before that such interference actually occurs.

Irrespective of the preferred solution, if the base station 5 that changes frequency has at least one son/leaf node 2, the BS handover procedure is signaled to the son/leaf node 2 that in turn executes an MS handover procedure so as to establish a new connection over the new channel, without data loss.

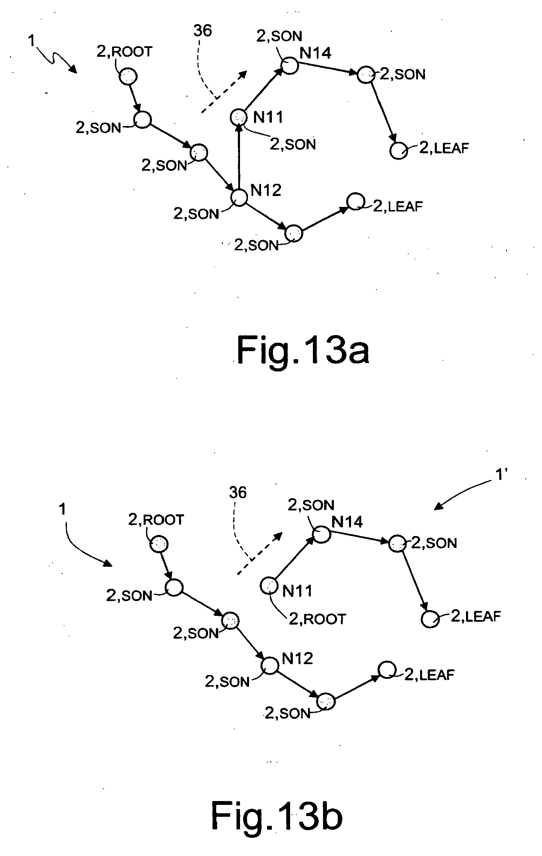

Figures 13a-13b show an exemplary cluster split procedure. According to this procedure, when a node 2 exits the cell coverage range, it forms an independent cluster 1' with its concatenated son/leaf nodes 2, that keep the same links and network tree structure. The working frequencies (that had already been assigned for zero interference) remain the same. This is an advantage with respect to non-MCM architectures, where a single frequency is shared throughout the cluster and needs to be suddenly changed at cluster split time, in order to avoid interference with the original cluster.

If node N₁₁ exits the cell covering range of node N₁₂ (Figure 13a, where the arrow 36 shows the movement of the node N₁₁), node N₁₁ becomes the root node 2r of a new cluster 1' (Figure 13b).

If node N₁₁ turns off its Base station 5, the nodes depending from it (N₁₄ and all nodes 2 connected thereto) first look for another reachable node of Cluster 1 to which they can connect and, if this is possible, they perform an Handover procedure, as already discussed with reference to Figures 12b-12c. If no connection is possible, node N₁₄ and each other node 2 that initially were connected to node N₁₁ become the root node 2r of a new cluster 1', formed by the son/leaf nodes 2 that were already linked to it (if any). Such existing links are kept with their original working frequencies, that do not interfere with each other. Immediately after, these new Clusters try to merge with each other, with the Cluster Merge procedure described below.

The same procedure is followed in case the root node 2r of a generic cluster 1 turns off; each one of its affiliated son nodes initially become the new root node 2r its own new cluster 1', keeping their own affiliated son/leaf nodes 2, and maintaining their original working frequency channel, that do not interfere with each other.

Immediately after, they try to perform an MS handover to any other reachable base station 5, if possible. If no connection is possible to any node of the initial Cluster 1, the new clusters 1' initiate a Cluster Merge procedure, described below.

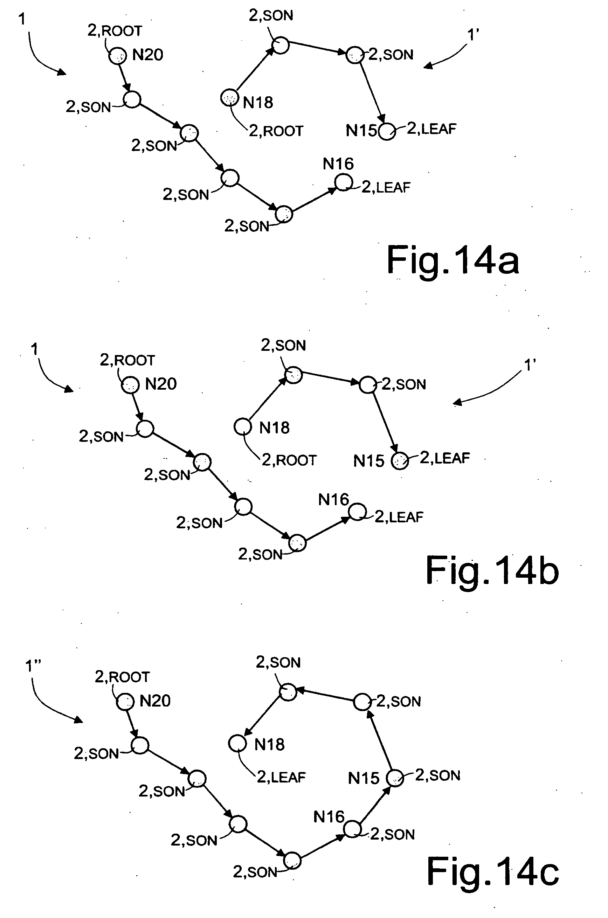

Figures 14a-14c show an exemplary cluster merge procedure.

When two independent clusters 1, 1' get close to each other during their movement, a radio link 7 can be established between them. Care needs to be taken so as to prevent interference among their working frequencies.

Standard functions for bit error rate (BER) and Radio Signal Strength Indication (RSSI) monitoring, available on COTS equipment, provide sensing measures of any existing or gradually increasing interferences on the working frequency channel.

Periodic scanning and handover scanning procedures of the neighboring spectrum on mobile stations 4 of all nodes 2 are included in the IEEE 802.16e standard and can be used to handle the cluster merge procedure.

Any possible interferences from re-use of the same frequency channels in the two clusters at decreasing or short distances are efficiently detected by means of the procedures and measures described above.

It may be necessary to revise the cell planning scheme and frequency assignments during early phases of cluster 1, 1' approach, in order to avoid frequency collisions and frequency overlaps. This may be easily accomplished by means of the BS Handover procedure described above, whereby an active base station 5 of a father node 2 changes its working channel together with all the mobile station 4 of its son nodes 2, if any exist.

As a first solution, free channels as reported by Periodic Scan procedures may be used for such adjustments. A further optimization may be accomplished by means of the intervention of the DCF block 15 functionality, that may drive optimal channel selection based on the knowledge of classical cell planning patterns and of the busy channels taken by existing active nodes within the own cluster. Dedicated messages at the application layer between distributed management function applications may speed it up. A radical rearrangement of one of the two clusters 1, 1' may be required to establish a comprehensive and consistent cell planning scheme in the new enlarged cluster, before setting up the new radio link 7 merging them.

However this may be reached by gradual incremental changes (one cell 10 at the time), starting form edge cells that first detect the effects of the new approaching cluster. Priority schedules may also be established based on a unique node identification number, or random backoff time delays, in order to prevent collisions and thrashing due to multiple nodes changing channel at the same time. The choice of the new channels may also be randomized to some extent with random numbers, or using the node identification numbers as seeds for random calculation of priority. Similar collision avoidance measures may also support the choice of winning cluster, that is the cluster that keeps its configuration and root node 2r, while the other cluster adjusts itself to the new scenario and registers its former root node 2r to a base station 5 of one of the nodes belonging to the winning cluster. Thus, cluster merge happens at the root node 2r of the losing cluster.

When approaching clusters 1, 1' get in contact (i.e. in proximity, within radio communication range) with any node 2, apart from the root node 2r, it may be optimal to modify the cluster configuration in order for that node 2 to be the root node 2r of the cluster, and then to rapidly register itself to a base station 5 of one of the nodes 2 of the winning cluster with its own embedded mobile station 4, which is initially free.

This adjustment just needs a Link Reversal procedure, whereby an existing radio link between two nodes 2 is maintained, but while the nodes 2 at its ends participate in the connection with exchanged roles: the node that formerly was connected with its base station 5 at one end of the radio link, now links itself with its embedded mobile station 4 (that just needs to perform a standard seamless handover to accomplish the subject change). Alternately, the node 2 that was formerly connected with its mobile station 4, now uses its own base station 5 to support the subject link, by registering the mobile station of the node 2 at the other end, mentioned above. This sole basic procedure is based on a controlled activation of standard handovers of mobile station 4 towards pre-selected target base stations 5. This procedure is controlled by the Distributed Control Function DCF and permits the election to root role of any node, changing the orientation of some backbone links 7 without affecting the overall topology and geometry of the cluster and of its existing links 7. Most leaf nodes 21 remain connected without changes. Only backbone nodes 2 are affected.

Re-synchronization takes place when the former root node 2r of the losing cluster gets registered to its new supporting base station 5 of a node 2 in the winning cluster. This happens rapidly and is delegated to low level physical functions of the WiMax standard.

Exceptional use cases may be conceived, where the winning cluster appears suddenly within radio coverage of the losing one, without previous notice, nor any gradual increase of interference levels.

This may happen, for example, if a cluster of vehicles (each vehicle being a node 2) pops up from a motorway gallery, or if a team of men (each man being a node 2) exits from a building.

In these cases, one of the two clusters 1, 1' has to be re-built in compliance with the daisy chain structural constraints, avoiding interference. In the worst case, a full cluster setup procedure is needed, starting from scratch. Therefore this scenario cannot be handled with fast mobility that requires a rapid configuration.

Figure 14a shows a first and a second cluster 1, 1' which are independent one from the other and not connected.

The first cluster 1 has a root node N₂₀ and a leaf node N₁₆. The second cluster 1' has a root node N₁₈ and a leaf node N₁₅.

When, Figure 14b, the leaf node N₁₅ of the second cluster 1' enters within radio coverage range of leaf node N₁₆ of the first cluster 1, a merging procedure (managed by the DCF block 15) starts so as to build a third cluster 1", formed by the nodes 2 of the first and second clusters 1, 1'.

According to the merging procedure, if the two nodes N₁₅, N₁₆ have the same phase (being both odd or even nodes), one of the two nodes 2 alternates its synchronization phase, so as to being able to connect with the other node 2. The choice of which node should change synchronization may be made, as already suggested, on random criteria or on the unique node identification number, to avoid collisions between simultaneous and non-coordinated actions. In the example shown, both nodes N₁₅ and N₁₆ are even nodes. Thus, node N₁₅ needs to change its phase, and becomes an odd node.

In the example shown above, the two nodes N₁₅ and N₁₆ have their mobile stations 4 connected to other nodes 2 and cannot directly establish a connection. Therefore, a Link Reversal procedure, Figure 14c, is performed as described above, with minimal traffic interruption. In particular, all the existing radio links 7 of the second cluster 1' are reversed, by inverting their MS-BS connection sequence. Then, the former root node N₁₈ of second cluster 1' acquires the role of a leaf node, thus forming the third, enlarged, cluster 1" having a single root node N₂₀.

The daisy chain mobile ad-hoc network described herein is also able to perform a Cluster Shrink/ Cluster Expand procedures, whereby the cell radius and radio range of selected or all nodes 2 are reduced/expanded, in compliance to the geometrical topology and mobility of the nodes 2 distributed on the environment. Such adaptation is performed under the coordination of the Distributed Control Function DCF of the nodes 2 in order to optimize the cell planning patterns according to such criteria as spectrum usage, channel reuse, network throughput, area coverage.

In fact when the nodes 2, belonging to a same cluster 1, are moving closer one another, reducing relative inter-node distances, it may turn out advantageous to shrink/expand their radio coverage radius, thus improving the possibility of re-using the same frequency more than one time within the cluster 1, or other neighboring clusters.

The Cluster Shrink procedure exploits the ability of the DCF block 15 in each node 2 to locally collect from the own base station RSSI and range measures of all registered mobile stations, and to control and optimize transmission power and cell radius of the own base station 5 accordingly. The embedded mobile station 4 in each node 2 is controlled by the base station 5 of the father node 2f to which it is registered. Therefore, the standard WiMax procedures ensure automatic adaptation of mobile stations 4 to the Cluster Shrink/Expand changes.

A similar procedure may be applied when the cluster 1 expands (nodes 2 drift apart). The DCF block 15 of each node 2, collecting power measures provided by MS scan procedures, may control the base station 5 so as to increase the transmission power, increasing the cell dimension.

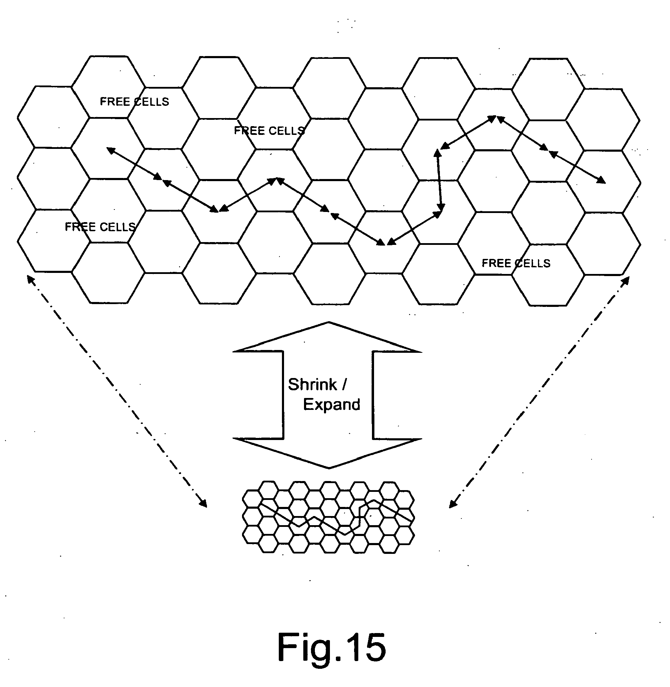

The procedures shown here maximize the possibility of using the same channel frequency in the cluster 1, also when the nodes 2 are densely close one another, as shown schematically in Figure 15. This criterion also maximizes network throughput at the cluster core, with full use of all available channels but minimum cell radius for best chance of re-use.

Alternately, an Expand policy may optimize cluster area coverage at cluster edges, with best chance of collecting new leaf nodes.

As an option, the DCF block 15 of selected nodes 2 may turn off their own respective base stations 5. The affected nodes 2 thus become leaf nodes 21 (only the mobile station 4 is active), the corresponding channel frequencies are freed and any node affiliated thereto establishes a new affiliation with a close father node 2f, using the frequency of the latter. Interference is thus eliminated with the advantage that the DCF block 15 of the newly changed leaf node 21 is not to control the power transmission of the respective base station 5. The decision of which base station 5 has to turn off first may be taken at a centralized level, for example by the root node 2r, taking into account the general situation. Alternately, the distribute control function DCF of any node may take this initiative based on local information, with a randomizing delay to prevent collision between coincident uncoordinated events. The distributed approach presents the advantage of simplicity and has no single point of failure. This holds also for most procedures presented here, as Cluster Shrink/Expand procedures, which may be implemented with very simple heuristics, as shrink/turn off base station when mobile station periodic scan reports several busy channels in the area.

According to the Multi Channel MANET (MCM) philosophy, the general control of the network may be demanded to a Common Control Channel (CCH), namely a long-range HF or VHF channel with low bit-rate through signalling (i.e. small control messages packets) broadcasting information about the macroscopic topology of the network and about the position of the clusters 1 on the field. Such data may be helpful during a Cluster Merge procedure, when two clusters 1 are coming closer, by preparing the nodes at the edge with different, non-interfering channels, and to connect with each other when the two clusters finally get in contact (i.e. within radio communication range).

Finally, it is clear that numerous variations and modifications may be made to the architecture and method described and illustrated herein, within the scope of the invention as defined in the attached claims.

For example, even if the WiMAX standard protocol manages MS-BS affiliation on the basis of best quality of service and/or higher signal, the DCF block 15 may implement additional procedures to customize MS-BS affiliation according to users particular needs.

Moreover, several different standard MAC and PHY protocol may be used other than IEEE 802.16e, still providing analogous quality of service, for example IEEE 802.16d.

Lastly, the GPS receiver 16 and/or the clock generator 20a, may be located (in a manner not shown) in the mobile station 4 instead of the base station 5. In this case, in each node, the mobile station 4 provides the synchronization signal Sync to the base station 5 that, in turn, provides the synchronization signal Sync to its son/leaf nodes 2s/sl.

## Claims

1. A mobile ad-hoc network comprising a plurality of mobile nodes (2), each node (2) comprising a first station (4) and a second station (5), communicatively interconnected to each other, and adapted to exchange data wherein the first station (4) is adapted to send a synchronization signal (Sync) to the second station (5), the first station (4) of each node (2) being a WiMax mobile station equipment supporting a point-to-point connection to a second station (5) of another node (2) is adapted to use a first frequency channel, and the second station (5) of each node being a WiMax base station equipment supporting a point-to-multipoint connection to a plurality of first stations (4) of a respective plurality of nodes (2) adapted to use a second frequency channel, different from said first frequency channel, so as to form at least a daisy chain concatenation of nodes, wherein the second station (5) of each node (2) comprises synchronization means (16) adapted to receive the synchronization signal (Sync) from the first station (4) communicatively connected therewith and to send the synchronization signal (Sync) to the first station (4) of said plurality of nodes (2) connected thereto and wherein each node (2) is configured to communicate with other nodes (2) belonging to the daisy chain concatenation using a WiMax radio access protocol.

2. A mobile ad-hoc network according to claim 1, wherein each node (2) is configured to communicate with other nodes (2) belonging to the daisy chain concatenation using a IEEE 802.16d or IEEE 802.16e radio access protocol.

3. A mobile ad-hoc network according to any of the preceding claims, wherein each node (2) further comprises an IP router (19) arranged between the first and the second station (4,5) and adapted to perform data exchange between the first and second station (4, 5); and a distributed control function block (15), connected to the first and second station (4, 5) and implementing network management procedures, including cluster formation, cluster split, cluster merge, cluster shrink and handover procedures.

4. A mobile ad-hoc network according to any of the preceding claims, wherein the first station (4) and the second station (5) are adapted to share a same transmission/reception front end stage (21).

5. A mobile ad-hoc network according to claim 4, wherein said transmission/reception front end stage (21) comprises an antenna (24), a power amplifier (22), a low noise amplifier (23) and a switching element (25) for alternately connecting the power amplifier (22) and the low noise amplifier (23) to the antenna (24), the power amplifier (22) and the low noise amplifier (23) being connected to the first and the second station (4, 5) through frequency shifting stages (27, 28) and analog/digital conversion elements (26).

6. A mobile ad-hoc network according to any of claims 1-3, wherein each node (2) further comprises a first and a second filter (30, 31) to transmit/receive on predefined upper band and/or lower band of a wide frequency band.

7. A mobile ad-hoc network according to claim 6, wherein each node (2) further comprises an antenna (24); a power amplifier (22) ; a low noise amplifier (23); a circulating element (32) for connecting the first and second filter (30, 31) to the antenna (24); and a first and a second switch (33) for alternatively connecting the first and the second filters (33) to the power amplifier (22) and the low noise amplifier (23) to the antenna (24), the power amplifier (22) and the low noise amplifier (23) being connected to the first and the second station (4, 5) through frequency shifting stages (27, 28) and analog/digital conversion elements (26).

8. A mobile ad-hoc network according to any of claims 1-5, wherein the first and second station (4, 5) of each node (2) are configured so as to transmit in a same first time interval of a time frame, and receive in a same second time interval of the time frame, different from said first time interval.

9. A mobile ad-hoc network according to claim 6 or 7, wherein, in each node (2), the first and second station (4, 5) are configured so that transmission phase of the first station (4) is performed in the same time intervals of reception phase of the second station (5) in two separate frequency channels, and vice versa.

10. A method of managing a mobile ad-hoc network comprising a plurality of mobile nodes (2), each node (2) comprising a first station (4) being a WiMax mobile station equipment supporting a point-to-point connection to a second station (5) of another node (12) and a second station (5) being a WiMax base station equipment supporting a point-to-multipoint connection to a plurality of first stations (4) of a respective plurality of nodes (2), comprising the steps of:
providing a first frequency channel for connecting the first station (4) of each node (2) to a single second station (5) of another node (2),
providing second frequency channel, different from said first channel, for connecting the second station (5) of each node (2) to a plurality of first stations (4) of a respective plurality of nodes (2),
forming a daisy chain concatenation of nodes,
sending, by the first station (4) of each node (2), a synchronization signal (Sync) to the second station (5), and
providing the synchronization signal (Sync) to the first station (4) of said plurality of nodes (2) connected to said second station (5),
each node (2) being configured to communicate with other nodes (2) belonging to the daisy chain concatenation using a WiMax radio access protocol.

11. A method according to claim 10, wherein the second station of each node (2) generates a cell (10) using a frequency channel which is different from frequency channels used by neighboring nodes (2), thus generating a non-interfering pattern of frequency cells (10).

12. A method according to claim 10 or 11, wherein, in each node (2), the first and second station (4, 5) are synchronized to each other so as to transmit data in same first time intervals of a time frame, and receive data in same second time intervals of the time frame, different from said first time interval.

13. A method according to claim 12, wherein, in each node (2), the first station (4) transmits in the first time interval using a first frequency band and receives in the second time interval, using said first frequency band, and the second station (5) of each node (2) transmits in the first time interval using a second frequency band and receives in the second time interval, using said second frequency band.

14. A method according to claim 12 or 13, wherein said plurality of nodes (2) comprises at least an even node and an odd node (2), the first station 4 of the even node (2) being synchronized with the second stations (5) of the odd node (2), the first and the second station (4, 5) of the even node (2) transmitting/receiving data with a time shift of half frame with respect to first and second stations (4, 5) of the odd node.

15. A method according to claim 10 or 11, wherein, in each node (2), the first and second station (4, 5) are synchronized so that the transmission phase of the first station (4) is performed in the same time intervals of the reception phase of the second station (5) on two separate frequency channels and vice versa.

## Patentansprüche

1. Mobiles Ad-hoc Netzwerk mit einer Mehrzahl von mobilen Knoten (2), wobei jeder Knoten (2) eine erste Station (4) und eine zweite Station (5) umfasst, die miteinander kommunikativ verbunden sind und so ausgelegt sind, dass sie Daten austauschen können, wobei die erste Station (4) so ausgebildet ist, dass diese ein Synchronisationssignal (Sync) an die zweite Station (5) sendet, wobei die erste Station (4) jedes Knotens (2) eine WiMax-Mobilstationseinrichtung ist, die eine Punkt-zu-Punkt-Verbindung mit einer zweiten Station (5) eines anderen Knotens (2) unterstützt und so ausgebildet ist, dass sie einen ersten Frequenzkanal nutzt, und die zweite Station (5) jedes Knotens eine WiMax-Basisstationseinrichtung ist, die eine Punkt-zu-Mehrpunkt-Verbindung zu einer Mehrzahl von ersten Stationen (4) einer jeweiligen Mehrzahl von Knoten (2) unterstützt und so ausgebildet ist, dass sie einen zweiten Frequenzkanal nutzt, der sich von dem ersten Frequenzkanal unterscheidet, um so wenigstens eine Daisy-Chain-Verkettung von Knoten zu bilden, wobei die zweite Station (5) jedes Knotens (2) Synchronisationsmittel (16) umfasst, die so ausgebildet sind, dass sie das Synchronisationssignal (Sync) von der mit dieser kommunikativ verbundenen ersten Station (4) empfangen und das Synchronisationssignal (Sync) an die erste Station (4) der damit verbundenen Mehrzahl von Knoten (2) senden, und wobei jeder Knoten (2) so konfiguriert ist, dass dieser unter Verwendung eines WiMax-Funkzugangsprotokolls mit anderen Knoten (2) kommuniziert, die zu der Daisy-Chain-Verkettung gehören.

2. Mobiles Ad-hoc Netzwerk nach Anspruch 1, in welchem jeder Knoten (2) so konfiguriert ist, dass dieser unter Verwendung eines Funkzugangsprotokolls IEEE 802.16d oder IEEE 802.16e mit anderen Knoten (2) kommuniziert, die zu der Daisy-Chain-Verkettung gehören.

3. Mobiles Ad-hoc Netzwerk nach einem der vorhergehenden Ansprüche, in welchem jeder Knoten (2) ferner aufweist einen IP Router (19), der zwischen der ersten und der zweiten Station (4, 5) angeordnet ist und so ausgebildet ist, dass dieser den Datenaustausch zwischen der ersten und zweiten Station (4, 5) durchführt, und einen verteilten Steuerfunktionsblock (15), der mit der ersten und zweiten Station (4, 5) verbunden ist und Netzwerk-Managementprozeduren implementiert, einschließlich Clusterformation, Clustersplit, Clustervereinigung, Clusterschrumpfung und Übergabeprozeduren.

4. Mobiles Ad-hoc Netzwerk nach einem der vorhergehenden Ansprüche, in welchem die erste Station (4) und die zweite Station (5) so ausgebildet sind, dass sich diese eine gleiche Sende/Empfang-Vorschaltstufe (21) teilen.

5. Mobiles Ad-hoc Netzwerk nach Anspruch 4, in welchem die Sende/Empfang-Vorschaltstufe (21) eine Antenne (24), einen Leistungsverstärker (22), einen Kleinsignalverstärker (23) und ein Schaltelement (25) zum abwechselnden Verbinden des Leistungsverstärkers (22) und des Kleinsignalverstärkers (23) mit der Antenne (24) umfasst, wobei der Leistungsverstärker (22) und der Kleinsignalverstärker (23) mit der ersten und der zweiten Station (4, 5) über Frequenzänderungsstufen (27, 28) und Analog/Digital-Wandlerelemente (26) verbunden sind.

6. Mobiles Ad-hoc Netzwerk nach einem der Ansprüche 1 bis 3, in welchem jeder Knoten (2) ferner ein erstes und ein zweites Filter (30, 31) umfasst, um auf einem vordefinierten oberen Band und/oder unteren Band eines breiten Frequenzbandes zu senden/zu empfangen.

7. Mobiles Ad-hoc Netzwerk nach Anspruch 6, in welchem jeder Knoten (2) ferner umfasst eine Antenne (24), einen Leistungsverstärker (22), einen Kleinsignalverstärker (23), ein zirkulierendes Element (32) zum Verbinden des ersten und zweiten Filters (30, 31) mit der Antenne (34), und einen ersten und zweiten Schalter (33) zum alternativen Verbinden des ersten und des zweiten Filters (23) mit dem Leistungsverstärker (22) und des Kleinsignalverstärkers (23) mit der Antenne (24), wobei der Leistungsverstärker (22) und der Kleinsignalverstärker (23) mit der ersten und der zweiten Station (4, 5) über Frequenzänderungsstufen (27, 28) und Analog/Digital-Wandlerelemente (26) verbunden sind.

8. Mobiles Ad-hoc Netzwerk nach einem der Ansprüche 1 bis 5, in welchem die erste und zweite Station (4, 5) jedes Knotens (2) so konfiguriert sind, dass diese in einem gleichen ersten Zeitintervall eines Zeitrahmens senden und in einem gleichen zweiten Zeitintervall des Zeitrahmens, das von dem ersten Zeitintervall unterschiedlich ist, empfangen.

9. Mobiles Ad-hoc Netzwerk nach Anspruch 6 oder 7, in welchem in jedem Knoten (2) die erste und zweite Station (4, 5) so konfiguriert sind, dass die Sendephase der ersten Station (4) in den gleichen Zeitintervallen der Empfangsphase der zweiten Station (5), und umgekehrt, in zwei separaten Frequenzkanälen durchgeführt wird.

10. Verfahren zum Verwalten eines mobilen Ad-hoc Netzwerks mit einer Mehrzahl von mobilen Knoten (2), wobei jeder Knoten (2) aufweist eine erste Station (4), die eine WiMax-Mobilstationseinrichtung ist, die eine Punkt-zu-Punkt-Verbindung mit einer zweiten Station (5) eines anderen Knotens (12) unterstützt, und eine zweite Station (5), die eine WiMax-Basisstationseinrichtung ist, die eine Punkt-zu-Mehrpunkt-Verbindung mit einer Mehrzahl von ersten Stationen (4) einer jeweiligen Mehrzahl von Knoten (2) unterstützt, mit den Schritten:
Bereitstellen eines ersten Frequenzkanals zum Verbinden der ersten Station (4) jedes Knotens (2) mit einer einzelnen zweiten Station (5) eines anderen Knotens (2),
Bereitstellen eines zweiten Frequenzkanals, der sich von dem ersten Kanal unterscheidet, zum Verbinden der zweiten Station (5) jedes Knotens (2) mit einer Mehrzahl von ersten Stationen (4) einer jeweiligen Mehrzahl von Knoten (2),
Bilden einer Daisy-Chain-Verkettung von Knoten,
Senden eines Sychronisationssignals (Sync) an die zweite Station (5) durch die erste Station (4) jedes Knotens (2), und
Bereitstellen des Synchronisationssignals (Sync) an der ersten Station (4) der Mehrzahl von Knoten (2), die mit der zweiten Station (5) verbunden ist,
wobei jeder Knoten (2) so konfiguriert ist, dass dieser unter Verwendung eins WiMax-Funkzugangsprotokolls mit anderen Knoten (2) kommuniziert, die zu der Daisy-Chain-Verkettung gehören.

11. Verfahren nach Anspruch 10, in welchem die zweite Station jedes Knotens (2) eine Zelle (10) unter Verwendung eines Frequenzkanals erzeugt, der von Frequenzkanälen unterschiedlich ist, die durch benachbarte Knoten (2) verwendet werden, so dass ein sich nicht störendes Muster von Frequenzzellen (10) erzeugt wird.

12. Verfahren nach Anspruch 10 oder 11, in welchem in jedem Knoten (2) die erste und zweite Station (4, 5) miteinander synchronisiert werden, um so Daten in gleichen ersten Zeitintervallen eines Zeitrahmens zu senden und Daten in gleichen zweiten Zeitintervallen des Zeitrahmens, die sich von dem ersten Zeitintervall unterscheiden, zu empfangen.

13. Verfahren nach Anspruch 12, in welchem in jedem Knoten (2) die erste Station (4) unter Verwendung eines ersten Frequenzbandes in dem ersten Zeitintervall sendet und unter Verwendung des ersten Frequenzbandes in dem zweiten Zeitintervall empfängt und die zweite Station (5) jedes Knotens (2) unter Verwendung eines zweiten Frequenzbandes in dem ersten Zeitintervall sendet und unter Verwendung des zweiten Frequenzbandes in dem zweiten Zeitintervall empfängt.

14. Verfahren nach Anspruch 12 oder 13, in welchem die Mehrzahl von Knoten (2) wenigstens einen geraden Knoten und einen ungeraden Knoten (2) umfasst, wobei die erste Station (4) des geraden Knotens (2) mit den zweiten Stationen (5) des ungeraden Knotens (2) synchronisiert wird, wobei die erste und die zweite Station (4, 5) des geraden Knotens (2) Daten mit einer Zeitverschiebung eines halben Rahmens in Bezug auf die erste und die zweite Station (4, 5) des geraden Knotens sendet/empfängt.

15. Verfahren nach Anspruch 10 oder 11, in welchem in jedem Knoten (2) die erste und die zweite Station (4, 5) so synchronisiert werden, dass die Sendephase der ersten Station (4) in den gleichen Zeitintervallen der Empfangsphase der zweiten Station (5), und umgekehrt, auf zwei separaten Frequenzkanälen durchgeführt wird.

## Revendications

1. Réseau mobile ad-hoc comprenant une pluralité de noeuds mobiles (2), chaque noeud (2) comprenant une première station (4) et une seconde station (5), interconnectées l'une à l'autre avec faculté de communication, et adaptées pour échanger des données dans lequel la première station (4) est adaptée pour envoyer un signal de synchronisation (Sync) à la seconde station (5), la première station (4) de chaque noeud (2) étant un équipement de station mobile WiMax supportant une connexion point-à-point vers une seconde station (5) d'un autre noeud (2) adaptée pour utiliser un premier canal de fréquence, et la seconde station (5) de chaque noeud étant un équipement de station de base WiMax supportant une connexion point-à-multipoint vers une pluralité de premières stations (4) d'une pluralité respective de noeuds (2) adaptées pour utiliser un second canal de fréquence, différent dudit premier canal de fréquence, de façon à former au moins une concaténation en guirlande de noeuds, dans lequel la seconde station (5) de chaque noeud (2) comprend des moyens de synchronisation (16) adaptés pour recevoir le signal de synchronisation (Sync) provenant de la première station (4) connecté avec faculté de communication avec celle-ci et pour envoyer le signal de synchronisation (Sync) à la première station (4) de ladite pluralité de noeuds (2) connectée à celle-ci et dans lequel chaque noeud (2) est configuré pour communiquer avec d'autres noeuds (2) appartenant à la concaténation en guirlande utilisant un protocole d'accès radio WiMax.

2. Réseau mobile ad-hoc selon la revendication 1, dans lequel chaque noeud (2) est configuré pour communiquer avec d'autres noeuds (2) appartenant à la concaténation en guirlande utilisant un protocole d'accès radio IEEE 802.16d ou IEEE 802.16e.

3. Réseau mobile ad-hoc selon l'une quelconque des revendications précédentes, dans lequel chaque noeud (2) comprend en outre un routeur IP (19) agencé entre la première et la seconde station (4, 5) et adapté pour réaliser un échange de données entre la première et la seconde station (4, 5) ; et un bloc de fonction de commande réparti (15), connecté à la première et seconde station (4, 5) et mettant en oeuvre des procédures de gestion de réseau, comprenant la formation de grappes, le fractionnement de grappes, la fusion de grappes, la réduction de grappes et des procédures de transfert.

4. Réseau mobile ad-hoc selon l'une quelconque des revendications précédentes, dans lequel la première station (4) et la seconde station (5) sont adaptées pour partager un même étage d'extrémité frontal d'émission/réception (21).

5. Réseau mobile ad-hoc selon la revendication 4, dans lequel ledit étage d'extrémité frontal d'émission/réception (21) comprend une antenne (24), un amplificateur de puissance (22), un amplificateur à faible bruit (23) et un élément de commutation (25) permettant de connecter en alternance l'amplificateur de puissance (22) et l'amplificateur à faible bruit (23) à l'antenne (24), l'amplificateur de puissance (22) et l'amplificateur à faible bruit (23) étant connectés aux première et seconde stations (4, 5) via des étages de déplacement de fréquence (27, 28) et des éléments de conversion analogique/numérique (26).

6. Réseau mobile ad-hoc selon l'une quelconque des revendications 1 à 3, dans lequel chaque noeud (2) comprend en outre un premier et un second filtre (30, 31) afin d'émettre/de recevoir sur une bande supérieure et/ou une bande inférieure prédéfinies d'une large bande de fréquence.

7. Réseau mobile ad-hoc selon la revendication 6, dans lequel chaque noeud (2) comprend en outre une antenne (24) ; un amplificateur de puissance (22) ; un amplificateur à faible bruit (23) ; un élément de circulation (32) permettant de connecter les premier et second filtres (30, 31) à l'antenne (24) ; et un premier et un second commutateur (33) permettant de connecter en alternance les premier et second filtres à l'amplificateur de puissance (22) et l'amplificateur à faible bruit (23) à l'antenne (24), l'amplificateur de puissance (22) et l'amplificateur à faible bruit (23) étant connectés à la première et à la seconde station (4, 5) via des étages de déplacement de fréquence (27, 28) et des éléments de conversion analogique/numérique (26) .

8. Réseau mobile ad-hoc selon l'une quelconque des revendications 1 à 5, dans lequel les première et seconde stations (4, 5) de chaque noeud (2) sont configurées de façon à transmettre dans un même premier intervalle de temps d'une trame temporelle, et recevoir dans un même second intervalle de temps de la trame temporelle, différent dudit premier intervalle de temps.

9. Réseau mobile ad-hoc selon la revendication 6 ou 7, dans lequel, dans chaque noeud (2), les première et seconde stations (4, 5) sont configurées de sorte que la phase d'émission de la première station (4) est réalisée dans les mêmes intervalles de temps de phase de réception de la seconde station (5) en deux canaux de fréquence séparés, et vice versa.

10. Procédé de gestion d'un réseau mobile ad-hoc comprenant une pluralité de noeuds mobiles (2), chaque noeud (2) comprenant une première station (4) étant un équipement de station mobile WiMax supportant une connexion point-à-point vers une seconde station (5) d'un autre noeud (2) et une seconde station (5) étant un équipement de station de base WiMax supportant une connexion point-à-multipoint vers une pluralité de premières stations (4) d'une pluralité respective de noeuds (2), comprenant les étapes de :
fourniture d'un premier canal de fréquence permettant de connecter la première station (4) de chaque noeud (2) à une seule seconde station (5) d'un autre noeud (2),
fourniture d'un second canal de fréquence, différent dudit premier canal, permettant de connecter la seconde station (5) de chaque noeud (2) à une pluralité de premières stations (4) d'une pluralité respective de noeuds (2),
formation d'une concaténation en guirlande de noeuds,
envoi, par la première station (4) de chaque noeud (2), d'un signal de synchronisation (Sync) à la seconde station (5), et
fourniture du signal de synchronisation (Sync) à la première station (4) de ladite pluralité de noeuds (2) connectée à ladite seconde station (5),
chaque noeud (2) étant configuré pour communiquer avec d'autres noeuds (2) appartenant à la concaténation en guirlande à l'aide d'un protocole d'accès radio WiMax.

11. Procédé selon la revendication 10, dans lequel la seconde station de chaque noeud (2) génère une cellule (10) utilisant un canal de fréquence qui est différent des canaux de fréquence utilisés par des noeuds voisins (2), générant ainsi un motif non interférent de cellules de fréquence (10).

12. Procédé selon la revendication 10 ou 11, dans lequel, dans chaque noeud (2), les première et seconde stations (4, 5) sont synchronisées l'une à l'autre de façon à émettre des données dans des mêmes premiers intervalles de temps d'une trame temporelle, et recevoir des données dans les mêmes seconds intervalles de temps de la trame temporelle, différents dudit premier intervalle de temps.

13. Procédé selon la revendication 12, dans lequel, dans chaque noeud (2), la première station (4) émet dans le premier intervalle de temps à l'aide d'une première bande de fréquence et reçoit dans le second intervalle de temps, à l'aide de ladite première bande de fréquence, et la seconde station (5) de chaque noeud (2) émet dans le premier intervalle de temps à l'aide d'une seconde bande de fréquence et reçoit dans le second intervalle de temps, à l'aide de ladite seconde bande de fréquence.

14. Procédé selon la revendication 12 ou 13, dans lequel ladite pluralité de noeuds (2) comprend au moins un noeud pair et un noeud impair (2), la première station (4) du noeud pair (2) étant synchronisée avec les secondes stations (5) du noeud impair (2), les première et seconde stations (4, 5) du noeud pair (2) émettant/recevant des données avec un décalage de temps d'une demi-trame par rapport aux première et seconde stations (4, 5) du noeud impair.

15. Procédé selon la revendication 10 ou 11, dans lequel, dans chaque noeud (2), les première et seconde stations (4, 5) sont synchronisées de sorte que la phase d'émission de la première station (4) est réalisée dans les mêmes intervalles de temps de la phase de réception de la seconde station (5) sur deux canaux de fréquence séparés et vice versa.
